# EUROPEAN PATENT SPECIFICATION

(11) **EP 0 848 276 B1**
(45) Date of publication and mention of the grant of the patent: **16.04.2003**
(21) Application number: 97121611.4
(22) Date of filing: 08.12.1997
(51) Int. Cl.: G02C 9/00

(54) **Auxiliary lenses for eyeglasses**
Vorsatz für Sehhilfen
Lentilles auxiliaires pour lunettes

(30) Priority: 13.12.1996 US 766327
(43) Date of publication of application: 17.06.1998
(60) Divisional application: 02017032.0
(73) Proprietor: Contour Optik Inc., Chiayi 621 (TW)
(72) Inventor: Chao, Richard, Chiayi 608 Taiwan R.O.C. (TW)
(74) Representative: Casalonga, Axel

(56) References cited:
- WO-A-90/09611
- DE-A- 4 316 698
- DE-U- 8 507 761
- DE-U- 8 806 898
- US-A- 5 416 537
- US-A- 5 568 207

## Description

The invention relates to an auxiliary frame for eyeglasses.

US Patent No. 5,568,207 to Chao comprise a primary frame having two magnet members provided on the upper side portions, and an auxiliary frame including a pair of arms each having a magnet member for engaging with that of the primary frame. Two hands are required for attaching the auxiliary frame to the primary frame.

An object of the invention is to provide an auxiliary frame for engaging onto the primary frame by only one hand.

As claimed, an eyeglass device comprises a primary frame including a bridge having a first connector means and an auxiliary frame including a bridge having a second connector means for magnetically engaging said first connector means. According to the invention, the first connector means is located on the top side of the bridge of the primary frame. The bridge of the auxiliary frame has a projection adapted to extend over and magnetically engage with the first connector means when the primary frame and the auxiliary frame are secured to each other so as to allow the auxiliary frame to be secured to the primary frame with only one hand by a user. Furthermore the bridge further comprises a stop means separate from the second connector means said stop means extending downwards to prevent that the bridge of the auxiliary frame disengages from the bridge of the primary frame.

The invention will be better understood by considering the enclosed drawings on which.
FIG. 1 is a top plan view showing a primary frame and an auxiliary frame separating from each other;
FIG. 2 is a top plan view of the primary frame and the auxiliary frame combination;
FIG. 3 is a front elevational view of the primary frame and the auxiliary frame combination;
FIG. 4 is a cross sectional view taken along middle bridge portions of FIG. 2;
FIGS. 5, 6, 7, 8 are cross sectional views similar to FIG. 4, showing four applications of the middle bridge portions of the eyeglass device; and
FIG. 9 is a top plan view showing another application of the eyeglass device.

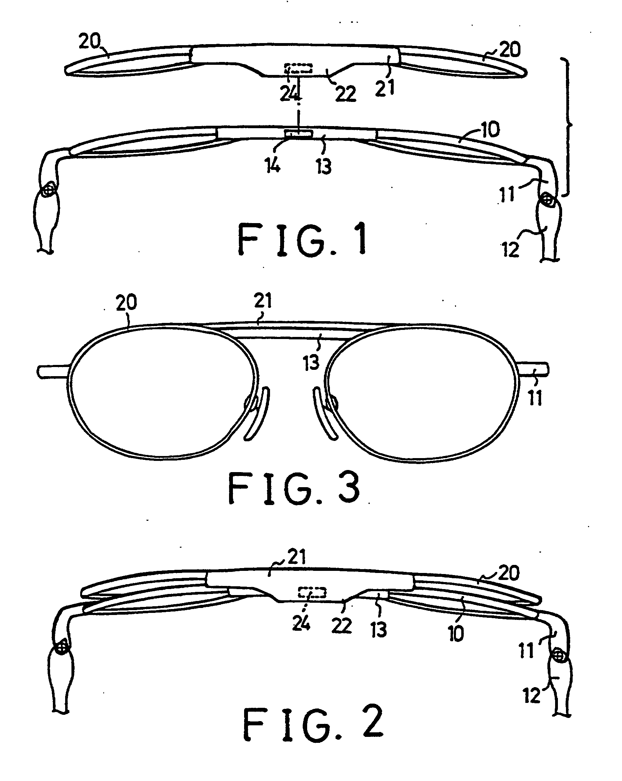

Referring to FIGS. 1 to 3, an eyeglass device comprises a primary frame 10 for supporting primary lenses and including two sides each having an extension composed typically of magnetic iron. It is only required to have the bridge 13 made by magnetically attractive material such that the bridge 21 of the auxiliary frame 20 may also be easily attached to the primary frame 10. Only one or one pair of magnetizable members are required to be a magnet for attaching the spectacle frames together.

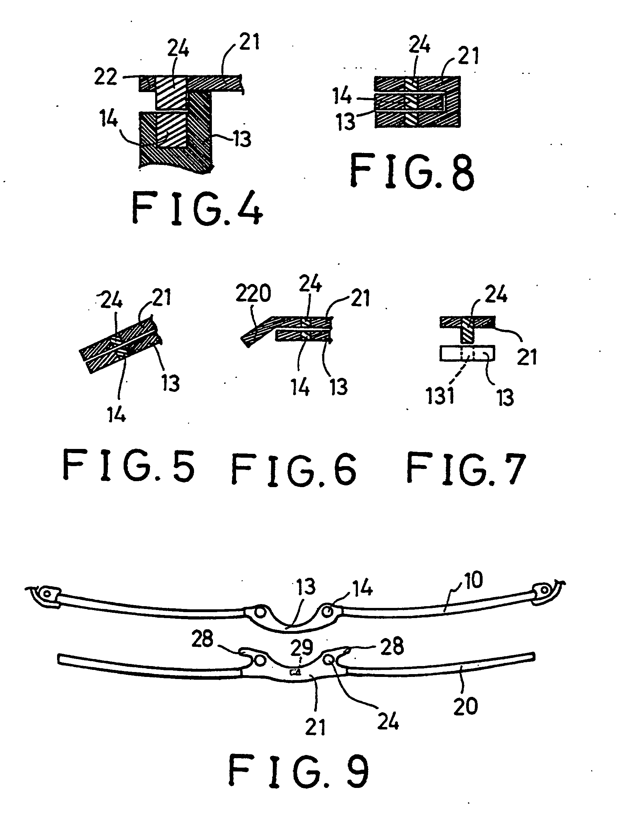

The connector 24 may be slightly extended downward toward the connector 14 (FIG. 4). The bridges 13, 21 may be tilted (FIG. 5), or the magnetic member 24 may be extended downward from the bridge 21 for engaging with a hole 131 of the bridge 13 (FIG. 7), or the bridge 21 may include a C-shape having two magnetic members 24 engaged above and below the magnetic member 14 (FIG. 8). As shown in FIG. 9, the bridge 21 may include one or more hand grips 28 for facilitating the holding of the auxiliary frame. According to the invention, the bridge includes a stop 29 separate from the second connector means (24) extending downward from the bridge 21 for engaging with the bridge 13 and for preventing the bridge 21 from being disengaged from the bridge 13.

In another embodiment, the bridge 21 includes a flange 220 tilted downward (FIG. 6) for engaging with the bridge 13.

Accordingly, the eyeglass device includes an auxiliary frame that may be easily secured to the primary frame with only one hand.

## Claims

1. An eyeglass device comprising a primary frame (10) including a bridge (13) having a first connector means (14) and an auxiliary frame (20) including a bridge (21) having a second connector means (24) for magnetically engaging said first connector means (14), **characterized in that** the first connector means (14) is located on the top side of the bridge (13) of the primary frame (10), **in that** the bridge (21) of the auxiliary frame has a projection (22) adapted to extend over and magnetically engage with the first connector means (14) when the primary frame and the auxiliary frame are secured to each other so as to allow the auxiliary frame (20) to be secured to the primary frame (10) with only one hand by a user, and **in that** the bridge of the auxiliary frame (21) further comprises a stop means separate from the second connector means (24), said stop means extending downwards to prevent that the bridge (21) of the auxiliary frame (20) disengages from the bridge (13) of the primary frame (10).

2. The eyeglass device according to claim 1, **characterized in that** the first connecting means (14) is a magnet.

3. The eyeglass device according to claim 1 or 2, **characterized in that** the second connecting means (24) is a magnet.

4. The eyeglass device according to anyone of the preceding claims, **characterized in that** the bridge (21) of the auxiliary frame includes one or more hand grips (28).

5. An auxiliary frame supporting a first and a second auxiliary lens and comprising a centrally arranged bridge, said bridge comprising connecting means (24) and a stop means separate from the connecting means (24), adapted for being secured with a primary frame to form an eyeglass device according any one of the claims 1 to 4.

## Patentansprüche

1. Sehhilfevorrichtung mit einem Hauptrahmen (10), der einen Steg (13) mit einem ersten Verbindungsmittel (14) umfasst, und einem Hilfsrahmen (20), der einen Steg (21) mit einem zweiten Verbindungsmittel (24) zum magnetischen Befestigen des besagten ersten Verbindungsmittels (14) umfasst, **dadurch gekennzeichnet, daß** das erste Verbindungsmittel (14) auf der Oberseite des Stegs (13) des Hauptrahmens (10) angeordnet ist, und dadurch, daß der Steg (21) des Hilfsrahmens einen vorstehenden Teil (22) besitzt, der zum Erstrecken über und zum magnetischen Befestigen mit dem ersten Verbindungsmittel (14) angepasst ist, wenn der Hauptrahmen und der Hilfsrahmen aneinander befestigt werden, um so zu ermöglichen, daß der Hilfsrahmen (20) an den Hauptrahmen (10) durch einen Anwender mit nur einer Hand befestigt werden kann, und dadurch, daß der Steg (21) des Hilfsrahmens weiterhin einen von dem zweiten Verbindungsmittel (24) separaten Anschlag umfaßt, wobei sich der Anschlag abwärts erstreckt, um zu verhindern, daß sich der Steg (21) des Hilfsrahmens (20) von dem Steg (13) des Hauptrahmens (10) löst.

2. Sehhilfevorrichtung gemäß Anspruch 1, **dadurch gekennzeichnet, daß** das erste Verbindungsmittel (14) ein Magnet ist.

3. Sehhilfevorrichtung gemäß Anspruch 1 oder 2, **dadurch gekennzeichnet, daß** das zweite Verbindungsmittel (24) ein Magnet ist.

4. Sehhilfevorrichtung gemäß einem der vorherigen Ansprüche, **dadurch gekennzeichnet, daß** der Steg (21) des Hilfsrahmens einen oder mehrere Handgriffe (28) umfaßt.

5. Hilfsrahmen, der eine erste und eine zweite Hilfslinse unterstützt und einen zentral angeordneten Steg umfaßt, wobei der Steg ein Verbindungsmittel (24) und einen von dem Verbindungsmittel (24) separaten Anschlag umfaßt, welcher zur Befestigung an einem Hauptrahmen angepaßt ist, um eine Sehhilfevorrichtung gemäß einem der Ansprüche 1 bis 4 zu bilden.

## Revendications

1. Lunettes comprenant une monture principale (10) comportant un pont (13) ayant un premier moyen de connexion (14) et une monture auxiliaire (20) comportant un pont (21) ayant un deuxième moyen de connexion (24) pour coopérer de façon magnétique avec ledit premier moyen de connexion (14), **caractérisées en ce que** le premier moyen de connexion (14) est situé sur la face supérieure du pont (13) de la monture principale (10), **en ce que** le pont (21) de la monture auxiliaire comporte une protubérance (22) adaptée pour s'étendre au-dessus du premier moyen de connexion (14) et coopérer de façon magnétique avec ce dernier quand la monture principale et la monture auxiliaire sont attachées l'une à l'autre de façon à permettre à un utilisateur de fixer la monture auxiliaire (20) à la monture principale (10) avec une seule main, et **en ce que** le pont (21) de la monture auxiliaire comprend en outre un moyen d'arrêt distinct du deuxième moyen de connexion (24), ledit moyen d'arrêt s'étendant vers le bas pour empêcher que le pont (21) de la monture auxiliaire (20) se dégage du pont (13) de la monture principale (10).

2. Lunettes selon la revendication 1, **caractérisées en ce que** le premier moyen de connexion (14) est un aimant.

3. Lunettes selon la revendication 1 ou 2, **caractérisées en ce que** le deuxième moyen de connexion (24) est un aimant.

4. Lunettes selon l'une quelconque des revendications précédentes, **caractérisées en ce que** le pont (21) de la monture auxiliaire comprend une ou plusieurs poignée(s) (28).

5. Monture auxiliaire supportant un premier et un deuxième verre auxiliaire et comprenant un pont disposé en position centrale, ledit pont comprenant un moyen de connexion (24) et un moyen d'arrêt distinct du moyen de connexion (24), adaptée pour être attachée à une monture principale pour former des lunettes conformes à l'une quelconque des revendications 1 à 4.
